# FASCICULE DE BREVET EUROPEEN

(11) **EP 1 533 107 B1**
(45) Date de publication et mention de la délivrance du brevet: **03.01.2007**
(21) Numéro de dépôt: 04026782.5
(22) Date de dépôt: 11.11.2004
(51) Int. Cl.: B29C 70/38, B29D 30/16, B29D 30/30

(54) **Appareil et procédé de pose d'une bandelette en continu sur une surface toroidale**
Vorrichtung und Verfahren zum Auflegen eines endlosen Streifens auf eine torusförmige Oberfläche.
Apparatus and method of applying a continuous strip on a toroidal surface.

(30) Priorité: 21.11.2003 FR 0313763
(43) Date de publication de la demande: 25.05.2005
(73) Titulaire: Société de Technologie Michelin, 63000 Clermont-Ferrand (FR); MICHELIN Recherche et Technique S.A., 1763 Granges-Paccot (CH)
(72) Inventeur: Nicolas, Serge, 63100 Clermont-Ferrand (FR); Chevaux, Nicolas, 63500 Issoire (FR); Monnereau, Patrice, 63350 Culhat (FR)
(74) Mandataire: Bauvir, Jacques

(56) Documents cités:
- US-A- 3 574 040
- US-A- 4 240 863
- US-A- 4 775 433
- US-A- 5 335 415
- US-A- 5 395 475

## Description

La présente invention concerne un procédé de pose de bandelette en continu sur un profil de forme généralement toroïdale.

La pose de bandelette en continu est aujourd'hui largement répandue dans l'industrie du pneumatique et des procédés divers ont été décrits pour déposer, dans le sens radial ou circonférentiel, des bandelettes de gomme ou des nappes de fils.

Plus particulièrement, le domaine de l'invention concerne la pose d'une bandelette en continu dans le sens circonférentiel sur la surface toroïdale d'une enveloppe de pneumatique, dans le cas où la largeur de la bandelette est très inférieure à la largeur de la surface de réception, et où de plus l'épaisseur de la bandelette est très inférieure à sa largeur.

Les procédés aptes à réaliser ces fonctions sont connus depuis longtemps et sont décrits, à titre d'exemple, dans les brevets US 3 251 722, US 4 240 863 et US 4 775 733, ou dans une version plus récente de la technologie, dans le brevet 5 335 415.
Ces appareils sont généralement composés :
- d'un bâti permettant de supporter et de mettre en rotation la surface à recouvrir,
- d'un module délivrant une bandelette de dimension calibrée ; cette bandelette peut tout aussi bien provenir d'une bobine sur laquelle elle aura été préalablement enroulée ou, plus généralement, directement d'une calandre ou d'une extrudeuse intégrée à l'installation,
- d'une tête d'application de la bande sur la surface de réception coopérant avec le module précédemment décrit, et ayant pour fonction de déposer la bandelette tangentiellement sur ladite surface de réception mise en rotation,
- d'un automatisme de pilotage des déplacements relatifs de la tête d'application par rapport à la surface de réception à recouvrir.

L'agencement de ces différents modules est variable d'une solution à une autre, selon que l'on fait se mouvoir la tête d'application autour de la surface de pose ou que l'on déplace la surface de pose par rapport à une tête d'application fixe. L'automatisme de pilotage évolue de son coté depuis des solutions entièrement mécaniques, jusqu'à des solutions faisant largement appel à l'électronique et à l'informatique pour piloter des moteurs à positionnement commandant les mouvements respectifs de la tête d'application, du bâti supportant le bandage ou encore l'entraînement en rotation du bandage.

Il est également connu du document US 3 574 040 un dispositif de pose de badelettes sur une surface plane dans lequel la tête de pose est munie d'un moyen permettant de déterminer et d'ajuster la position de l'axe de rotation du rouleau d'application de la bandelette de manière à le disposer parallèlement à la tangente au profil transversal de pose au point d'application.

Toutefois, l'ensemble de ces solutions se caractérise par le fait que les automatismes de pilotage font largement appel à des gabarits, dans le cas des solutions mécaniques ou électromécaniques, ou à des algorithmes de calcul dont les fondements sont établis sur une connaissance précise et préétablie de la forme et de la position du profil transversal de la surface de réception. Pour chaque rotation complète de la surface de pose, le pas transversal du mouvement de la tête d'application par rapport à la surface de réception est prédéterminé en fonction de la largeur de la bande et de la position de la tête d'application par rapport à un secteur déterminé du profil transversal de la surface de réception. Ces solutions sont généralement bien adaptées lorsque la surface de réception présente une géométrie connue et maîtrisée, ce qui est généralement le cas lorsque l'on a affaire à une forme ou à un noyau rigide, mais également lorsqu'il est nécessaire de déposer une quantité de gomme ou de fil selon un profil transversal particulier. Cette dernière application est réalisée en adaptant en conséquence le pas transversal du mouvement de la tête d'application par rapport à la surface de réception de manière à superposer et à juxtaposer de manière contrôlée et variable les bandelettes les unes par rapport aux autres.

Il existe toutefois des situations pour lesquels ces dispositifs peuvent être jugés trop lourds à mettre en oeuvre voire inadaptés.

Une situation de ce genre concerne le processus de rechapage d'enveloppes de pneumatiques, au cours duquel il est nécessaire de déposer une fine couche de gomme dite de liaison sur la surface extérieure d'un bandage en cours de rechapage de manière à renforcer l'interface entre la carcasse et la bande de roulement. Situées au coeur du pneumatique, ces gommes ont la particularité d'être très réactives et d'avoir des temps de cuisson très courts afin de minimiser cuisson très courts afin de minimiser les transferts thermiques pour réaliser, en presse ou en autoclave, la vulcanisation de la carcasse une fois recouverte de sa bande de roulement. Ceci est le cas en particulier lorsque l'on met en oeuvre des gommes dites auto-cuisantes et des bandes de roulement précuites.

Dans ces conditions, il n'est plus question d'utiliser des gommes de liaison sous la forme de bandes de gomme pré-calandrées de la largeur de la surface de réception et posées à la demande sur cette dernière, préalablement à la pose de la bande de roulement, en raison de l'évolution trop rapide des caractéristiques de la gomme de liaison et des contraintes que cela génèrerait dans l'organisation du processus de fabrication du fait de la nécessité de limiter les temps de stockage et les attentes.

Une solution élégante consiste à déposer par enroulements successifs de spires jointives une bandelette de gomme de liaison provenant directement d'une extrudeuse ou d'une calandre adaptée, et de réaliser en ligne la dépose de la bandelette sur la surface de réception.

Afin de rendre l'usage de ce procédé tout à fait satisfaisant, il convient également de s'affranchir d'un dernier obstacle constitué par le fait que les bandages en cours de rechapage ont des surfaces de réception dont les profils transversaux peuvent avoir des formes extrêmement diverses d'une dimension à une autre, mais également au sein d'une même dimension. Dans le cas où l'on souhaiterait utiliser un des procédés tel que décrit dans l'art antérieur, ceci obligerait à réaliser autant de recettes ou d'algorithmes de pilotage des mouvements de la tête d'application que de dimensions et de formes particulières de surface de réception de la bandelette, ce qui peut représenter une source de coût non négligeable.

L'invention telle que décrite ci après a pour but de lever cette dernière difficulté et propose un appareillage permettant de déposer une bandelette sur une surface en rotation ayant une forme quelconque sans qu'il soit au préalable nécessaire de déterminer une recette de pilotage des mouvements de la tête d'application.

L'appareillage selon l'invention est décrit dans la revendication 1.

Cet appareillage est composé :
- d'un bâti supportant la surface de réception et muni d'un moteur destiné à mettre cette dernière en rotation,
- d'un module de distribution de ladite bandelette, coopérant avec une tête de pose débouchant sur un moyen d'application destiné à déposer la bandelette sur ladite surface de réception, ladite tête de pose étant susceptible d'avoir des mouvements de translations selon un axe XX' parallèle à l'axe de rotation ZZ' de la surface de réception et selon un axe YY' parallèle à une direction radiale passant sensiblement par le point de contact du moyen d'application de la bandelette avec la surface de réception, ladite tête de pose étant dotée d'un mouvement de rotation autour d'un axe AA' sensiblement perpendiculaire aux axes XX' et YY' et tangent au point de contact entre le moyen d'application de la bandelette et la surface de réception.

L'appareillage est relié à un automatisme de pilotage de chacun des organes autorisant ces mouvements.

Cet ensemble est caractérisé en ce que la tête de pose comporte un dispositif permettant de déterminer la position angulaire de la tête de pose autour de l'axe AA' et d'estimer l'angle de tangence formé entre la tangente TT' au profil transversal de la surface de réception au point de contact entre le moyen d'application de la bandelette et la surface de réception, et un axe parallèle à l'axe de rotation ZZ'.

Les mouvements de la tête de pose en rotation autour de l'axe AA' et en translation le long des axes XX' et YY' sont déterminés en fonction de la valeur de l'angle de tangence de façon à déplacer la tête de pose continuellement au cours de chaque révolution de la surface de réception, dans une direction sensiblement paralllèle à la tangente TT'.

Il suffit pour cela de calculer à chaque instant les valeurs des déplacements de la tête de pose selon les axes XX' et YY', dépendantes de fait de la valeur instantanée de l'angle de tangence et de la valeur prédéterminée d'un pas constant, généralement sensiblement égal à la largeur de la bandelette, pour obtenir, à chaque rotation de la surface de réception, un déplacement continu de ladite tête de pose dans une direction parallèle à la direction de la tangente TT' au point de contact entre le moyen d'application et la surface de réception, de manière à ce que la distance entre deux spires consécutives soit en tout point de la circonférence égale à la valeur du pas. Le même automatisme s'avère également apte à piloter l'orientation de la tête de pose, également dépendante de la seule variation de l'angle de tangence, de manière à positionner la bande tangentiellement à la surface de réception au point d'application en rendant parallèle la direction transversale de ladite bandelette à la tangente TT'. Ceci permet de juxtaposer précisément chacune des spires aux spires qui lui sont directement adjacentes, et de déposer une couche régulière sur la surface de réception.

La tête de pose suit donc la forme du profil transversal sans faire appel à une connaissance préalable de ce dernier et sans qu'il soit nécessaire d'utiliser un gabarit à la forme dudit profil transversal ou d'introduire dans l'automatisme des données concernant ledit profil.

Il est facile de comprendre que l'usage d'un tel appareillage ne se limite pas à la seule application d'une gomme de liaison pour le rechapage des enveloppes de pneumatiques.

Un premier exemple d'utilisation concerne la fabrication des pneumatiques destinés aux motocyclettes de forte cylindrée pour lesquels il est intéressant de déposer une nappe de fil de renfort à "zéro degré" sous la partie destinée à recevoir la bande de roulement.

Une autre application s'avère particulièrement intéressante et concerne l'ensemble des situations rencontrées lors de la fabrication des enveloppes de pneumatiques lorsqu'il est nécessaire d'améliorer la qualité des interfaces entre deux couches de gomme de nature différentes ou encore lorsqu'il s'avère indispensable d'améliorer le collant à cru d'un profilé caoutchoutique. Pour résoudre ces questions, il est traditionnellement fait usage de dissolution à base de mélange de caoutchouc et de solvant. Toutefois, la toxicité des vapeurs de ces solvants entraîne des nuisances que l'on cherche à réduire par tous les moyens. Il est ainsi facile d'imaginer qu'un dispositif, tel que proposé dans l'invention, est particulièrement adapté pour réaliser la dépose d'une bandelette de mélange caoutchouteux de très fine épaisseur sur la surface d'une enveloppe en cours de fabrication et dont le profil de la section transversale est éminemment variable. Cette couche de gomme de quelques centièmes de millimètres d'épaisseur remplace avantageusement toute dissolution à base de solvant et représente une quantité de matière équivalente à celle déposée dans la situation antérieure.

Le procédé de pose d'une bandelette selon l'invention est décrit dans la revendication 12.

Des formes avantageuses de l'invention font l'objet des revendications dépendantes.

La description ci après se propose de donner un exemple non limitatif de réalisation d'un appareillage conforme à l'invention en s'appuyant sur les figures dans lesquelles:
- la figure 1 représente un schéma permettant de visualiser les positions respectives des axes décrivant les mouvements relatifs des différents organes de l'appareillage,
- la figure 2 représente un schéma explicatif détaillé des déplacements de la tête de pose au point de contact entre le moyen d'application et la surface de réception,
- la figure 3 représente une vue schématique d'un dispositif permettant de déterminer l'angle de tangence,
- la figure 4 représente un schéma des positions relatives de la tête de pose et de la surface de réception,
- la figure 5 représente une vue schématique en perspective de l'implantation d'un appareillage conforme à l'invention,
- la figure 6 représente un schéma de fonctionnement de l'appareillage tel que décrit dans la figure 5,
- la figure 7 représente une vue schématique en perspective de l'implantation de l'appareillage tel que décrit dans les figures 5 et 6, dans une seconde position,
- la figure 8 représente une vue schématique partielle en perspective d'un dispositif conforme à l'invention selon une variante de réalisation,
- les figures 9A et 9B représentent un schéma de fonctionnement de la variante décrite sur la figure 8.

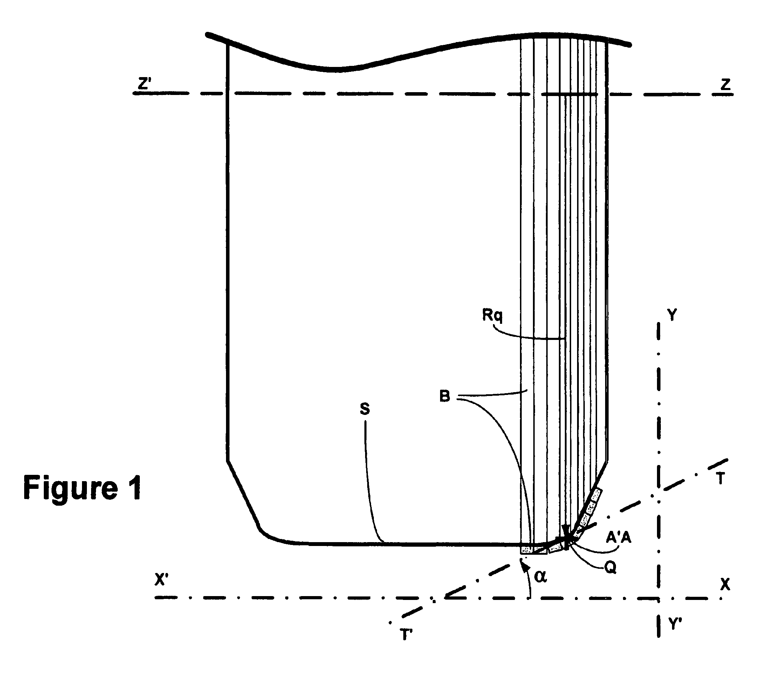

Dans ce qui suit, on désignera par les mêmes références les éléments de l'appareillage ayant des fonctions identiques, tels que représentés sur les figures 1 à 9.

La figure 1 permet de visualiser les positions respectives des axes de repérage utiles pour décrire un appareillage conforme à l'invention.

En référence à l'axe de rotation ZZ' de la surface de réception S, on positionne successivement l'axe XX' parallèle à l'axe ZZ' et l'axe YY' parallèle à une direction radiale passant par le point Q correspondant sensiblement au centre du contact entre le moyen d'application 112 de la bandelette B et la surface de réception S. La direction YY' est donc perpendiculaire aux axes XX' et ZZ', et le plan formé par les directions XX' et YY' passant par le point Q est un plan équatorial passant par l'axe ZZ' dont l'intersection avec la surface S délimite le profil transversal de cette dernière.

La tangente TT' au profil transversal de la surface de réception au point de contact Q forme un angle de tangence α avec la direction de l'axe XX'.

La distance radiale du point Q à l'axe ZZ' est notée Rq. La vitesse circonférentielle Vq au point Q est égale à 2*π*N* Rq où N représente le nombre de tours par unité de temps de la surface de réception. La valeur de Rq peut être mesurée à chaque instant lors du déplacement de la tête de pose le long du profil transversal de la surface de réception pour peu que l'on indexe correctement la position de l'axe ZZ' dans un repère formé sur l'axe YY'. Connaissant les valeurs successives des déplacements opérés selon l'axe YY', il est facile de déduire les valeurs de Rq et, si l'on désire rendre la valeur Vq de la vitesse circonférentielle au point Q constante et égale à une vitesse de référence prédéterminée V, il suffit de réguler la vitesse de rotation N de la surface de réception de manière à ce que N soit égale V / 2 * π * Rq.

Dans le cas de l'application telle que décrite ci après la forme de la surface de réception est sensiblement toroïdale, mais on peut aisément transposer ce qui suit à une forme sensiblement cylindrique, conique ou d'autres encore, sans se départir des principes généraux du fonctionnement d'un appareillage conforme à l'invention.

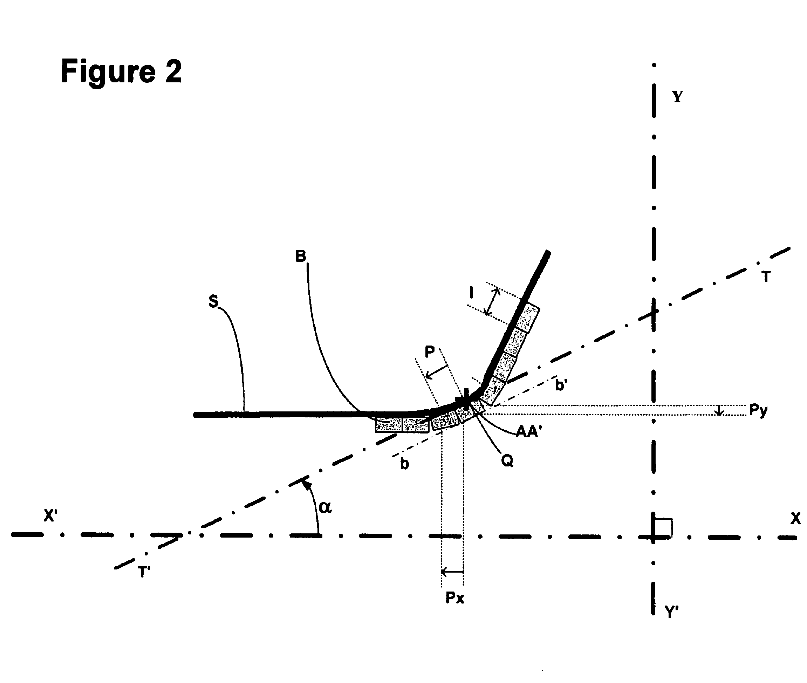

La figure 2 détaille les déplacements relatifs de la tête de pose par rapport à la surface de réception selon les axes XX' et Y Y'. A chaque rotation de la surface S, on cherche en effet à déplacer la tête de pose et le moyen d'application de la bandelette B sur la surface de réception dans une direction tangentielle au profil transversal de cette dernière de la valeur d'un pas P constant et prédéterminé et généralement sensiblement égal à la valeur de la largeur 1 de la bandelette B. Pour ce faire, il convient donc d'effectuer à chaque rotation un mouvement continu, selon la direction TT' de manière à ce que la tête de pose se soit décalée d'une distance égale à P après chaque révolution. Connaissant la valeur de l'angle de tangence α, on peut calculer facilement les valeurs de ces déplacements dans les directions XX' et YY', soit respectivement Px et Py, où Px égale P*Cosinus α et où Py égale P*Sinus α. On observera que la valeur du pas P peut être adaptée, selon que l'on désire faire plus ou moins se chevaucher les spires de bandelette.

De manière à ce que la distance entre deux spires consécutives soit en tout point de la circonférence égale à la valeur du pas P le mouvement relatif de la tête d'application par rapport à la surface de réception s'effectue de manière continue, et donc proportionnellement à la vitesse de rotation N. On calculera donc les vitesses de déplacement instantanées selon les axes XX' et YY' telles que Vx soit égale à N*Px et Vy égale à N*Py.

L'axe AA' passant par le point de contact Q entre le moyen d'application 112 et la surface de réception, est sensiblement perpendiculaire au plan formé par les axes XX' et YY' passant par Q. On peut donc considérer que l'application de la bandelette B sur la surface de réception se fait tangentiellement à cette dernière lorsque le plan formé par la bandelette au point de contact Q est tangent à la surface S et que la direction bb' transversale à la bandelette au point d'application est parallèle à la direction TT'. La connaissance de l'angle de tangence α permet à l'automatisme de piloter la rotation à effectuer autour de l'axe AA' afin de maintenir la direction bb' parallèle à la direction TT'.

Les valeurs du pas P et de la vitesse V sont des constantes dont la détermination est indépendante de la connaissance du profil transversal de la surface S. Ainsi la seule connaissance de la valeur instantanée de l'angle de tangence α permet de déterminer l'ensemble des mouvements relatifs de la tête d'application par rapport à la surface de réception S, en rotation autour de l'axe AA' et en translation selon les directions XX' et YY', sans qu'il soit nécessaire d'utiliser un gabarit taillé au profil transversal de ladite surface ou d'introduire au préalable la forme de ce profil dans une mémoire de l'automatisme de pilotage.

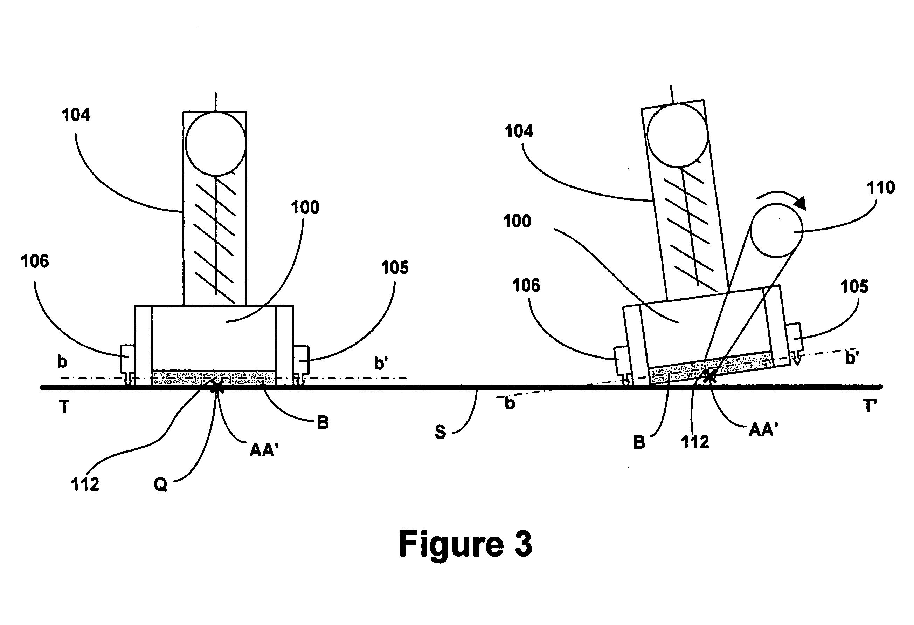

La figure 3 représente un mode particulier de réalisation d'un dispositif permettant d'estimer l'angle de tangence α dans lequel la tête d'application 100 est dotée de deux palpeurs 105 et 106 situés sur la tête de pose transversalement de part et d'autre du moyen d'application 112. Lorsque ces deux palpeurs sont en contact avec la surface de réception S, on en déduit que l'axe bb' au point de contact Q entre le moyen d'application et la surface de réception, est sensiblement parallèle à l'axe TT' tangent au profil transversal de la surface de réception S au point Q et confondu avec ce dernier dans cette représentation schématique. Lorsqu'un des palpeurs n'est plus en contact avec la surface S un moteur 110 fait pivoter la tête de pose autour de l'axe AA' de manière à ramener ce palpeur en contact avec la surface de réception. Il suffit alors d'indexer les mouvements de rotation selon l'axe AA' par rapport à un repère angulaire donné pour connaître à chaque instant la valeur de l'angle de tangence α.

Il convient toutefois que les palpeurs 105 et 106 soient les plus proches possibles l'un de l'autre de manière à avoir la connaissance la plus précise de l'angle α. En pratique, leur écartement est sensiblement égal à la largeur 1 de la bandelette B.

Ce dispositif s'avère particulièrement performant dans la mesure où il permet simultanément de connaître la valeur de l'angle de tangence α et d'assurer le parallélisme entre l'axe bb' et la tangente TT', réalisant de ce fait la pose de la bandelette B tangentiellement par rapport à la surface S.

D'autres dispositifs de mesure de l'angle de tangence α, faisant appel à des capteurs indépendants, sont possibles et permettent de réaliser des fonctions équivalentes à celles décrites ci-dessus. A titre indicatif, on citera la possibilité de réaliser une mesure d'incidence par rayon laser en deux points proches de l'axe TT' ou encore d'utiliser un coussin d'air à pression régulée..

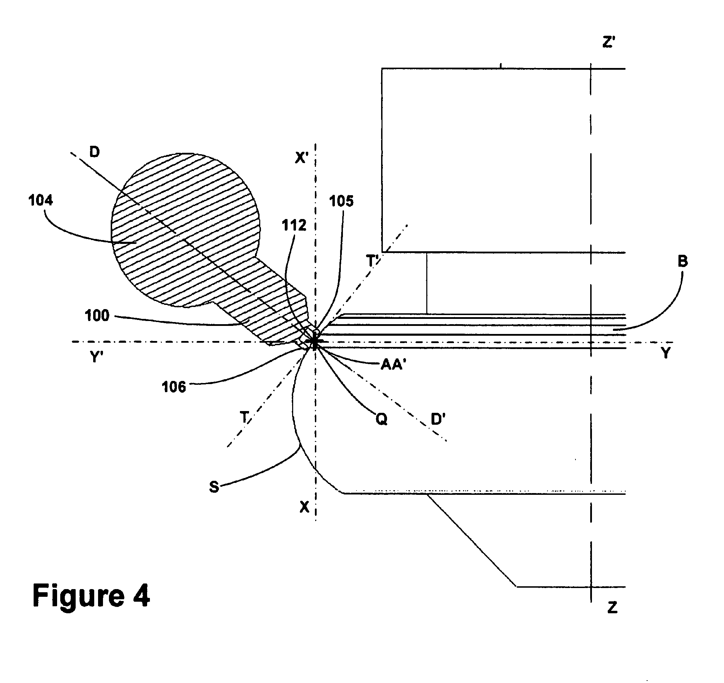

La figure 4 représente une vue schématique des positions respectives de la tête de pose 100 du moyen d'application 112 et de la surface de réception S pendant la pose d'une bandelette.

Dans le cas où l'on souhaiterait déposer une bandelette B constituée d'un mélange caoutchouteux, il s'avère particulièrement judicieux d'intégrer l'outil d'extrusion 104 à la tête de pose comme cela est représenté schématiquement sur les figures 3 et 4. Cette disposition permet, lorsque l'on choisit de rendre la tête de pose mobile par rapport à la surface de réception, d'éviter l'utilisation d'un module de distribution de la bandelette depuis un module fixe vers la tête de pose. En effet, un module ayant cette fonction comprend généralement une multitude de rouleaux de renvoi et entraîne des variations géométriques de la bandelette, ce qui a pour effet d'affecter la régularité de la largeur de cette dernière et la jointivité des spires de bandelette les unes par rapport aux autres.
Dans le cas d'une bandelette comportant des câbles de renfort, on fera appel à un module de déroulage classique et non détaillé dans le cadre de la présente description, et permettant d'amener la bandelette vers la tête de pose.

Le moyen d'application 112 est adapté à la nature de la bandelette à déposer et a pour fonction d'assurer la mise en contact de cette dernière avec la surface de réception. Il peut être constitué par un rouleau dans le cas d'une bandelette provenant d'un module de distribution non intégré à la tête de pose ou encore par l'orifice du moyen d'extrusion 104 lorsque ce dernier est intégré à la tête de pose 100. On considère que le plan de la bandelette B au niveau du point d'application Q est tangent à la surface de réception S.

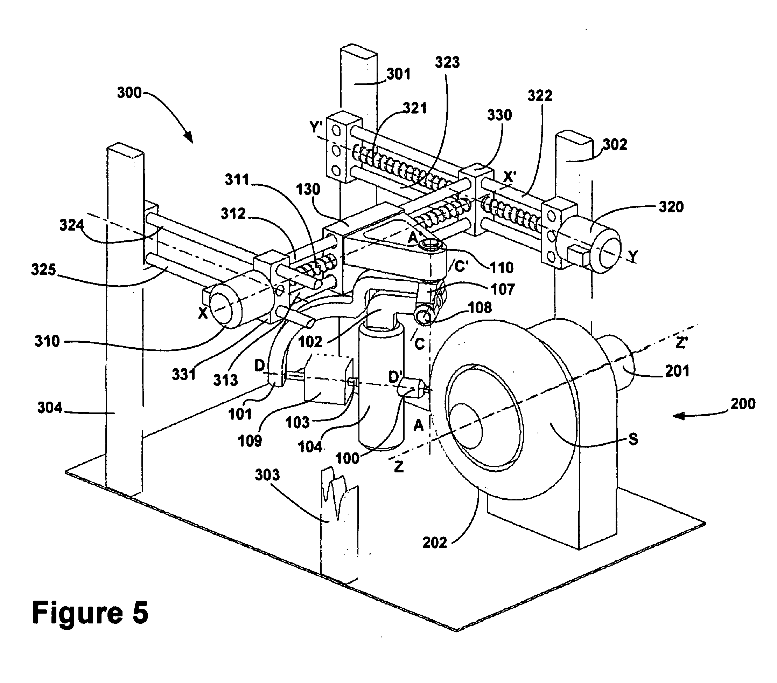

L'appareillage tel que représenté en vue perspective schématique sur la figure 5 est composé d'un bâti 200 supportant une carcasse de pneumatique 202 dont la surface extérieure S est destinée à recevoir une bandelette.

La surface S est entraînée en rotation autour de l'axe ZZ' par un moteur 201.

Un châssis 300 supporte l'ensemble des organes permettant le déplacement de la tête de pose 100 par rapport à la surface de réception S dans les directions XX' et YY'. On notera que, dans le cas de l'application décrite ici à titre d'exemple de mise en oeuvre de l'invention et dans le cadre du référentiel géométrique de l'appareillage choisi, le bâti 200 est fixe et que la tête de pose se déplace par rapport à ce dernier. On peut également, et sans se départir de l'esprit de l'invention, réaliser une tête de pose fixe et un bâti mobile dans les directions XX' et YY'.

Le châssis métallique est constitué par quatre colonnes, 301, 302, 303, 304, implantées sur la même base que le bâti 200. Ces colonnes supportent des axes motorisés en translation dans des directions se confondant avec les axes XX' et YY'. Chacun de ces axes est composé d'une vis sans fin, 311, 321, motorisée par des moteurs 310, 320 afin d'entraîner des platines 330, 331 et 130 coulissant sur des glissières 312, 313 et 322, 323, 324, 325 elles-mêmes parallèles respectivement aux directions XX' et YY'.
Dans cette configuration, la platine 130 est amenée à se déplacer dans un plan formé par les axes XX' et YY'.
Pour assurer les déplacements selon les axes XX', Y Y' et la rotation autour de l'axe AA', on peut choisir des moteurs de type asynchrone, respectivement 310, 320 et 110, où d'une technologie équivalente, asservis en position à l'aide d'un capteur de positionnement. Cette technologie permet d'assurer le positionnement de la tête d'application avec une précision suffisante.
Cette configuration est la plus simple de réalisation, mais il est possible de disposer les axes XX' et YY' de manière différente ou encore de combiner des mouvements de rotation avec des mouvements de translation dans le but de faire décrire à la platine un mouvement dans un plan et permettant à la tête de pose d'atteindre l'ensemble des points de la surface S. Il suffira à l'homme du métier d'adapter en conséquence le calcul des valeurs des déplacements.

La platine 130 supporte un axe motorisé 110 sur lequel est fixée une base 107. L'axe motorisé 110 est sensiblement confondu avec l'axe AA'.

Il serait tout à fait possible de faire fonctionner l'appareillage en disposant la tête de pose 100 directement sur la base 107 par l'intermédiaire d'un bras. Toutefois ce mode de fonctionnement ne permet pas de s'affranchir des irrégularités circonférentielles localisées de la surface S et il s'avère intéressant de disposer d'un système permettant d'appliquer avec une pression constante la tête de pose sur la surface de pose S.

A cet effet, la base 107 supporte à son tour un arbre 108 pivotant librement autour d'un axe CC' et auquel est relié un bras 102. L'axe CC' est perpendiculaire à l'axe AA' et sensiblement parallèle à la direction transversale bb' de la bandelette B au niveau du moyen d'application et au plan de la bandelette au point d'application Q. De ce fait, lorsque le moyen d'application 112 est en contact avec la surface S, l'axe CC' est sensiblement parallèle à la direction TT', tangente au profil transversal de la surface S au point de contact Q entre le moyen d'application 112 et la surface de réception S.

Un étrier 101 est également fixé par une de ses extrémités sur la base 107. L'outil d'extrusion 104 est fixé sur le bras 102 et débouche sur le moyen d'application 112 disposé sur la tête de pose 100. Un piston 109 est relié à l'autre extrémité de l'étrier 101 et applique, selon une direction DD' perpendiculaire à l'axe CC' (voir également la figure 4), une force constante sur le dos de l'outil d'extrusion 104 de manière à maintenir en contact permanent le moyen d'application avec la surface S quelles que soient les irrégularités circonférentielles locales de cette dernière.

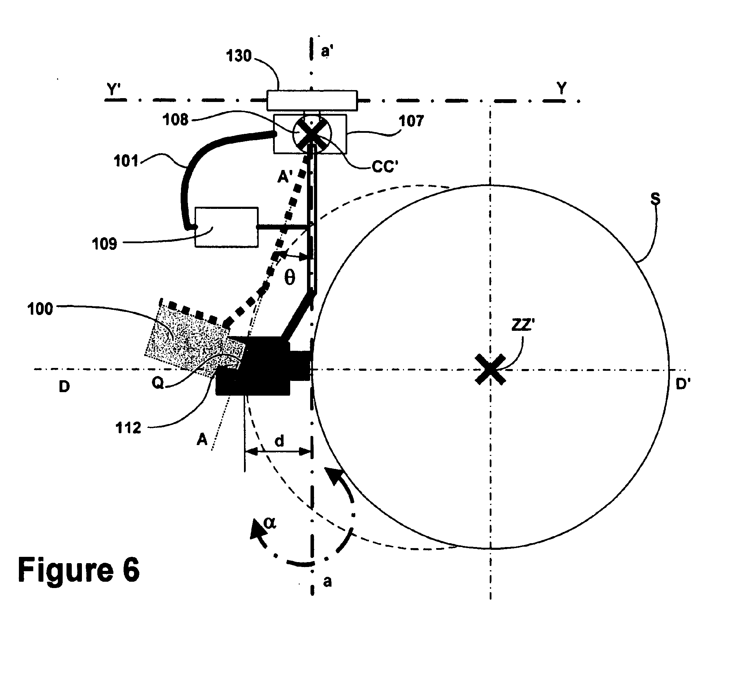

Il convient alors, comme cela est schématisé sur la figure 6, de réguler la position de la platine 130 selon les directions XX' et YY' afin de rendre la valeur de l'écart angulaire θ, encore nommé angle de compliance, égale à zéro de manière à assurer que l'axe AA' passant par le point d'application Q se confonde avec l'axe aa" perpendiculaire au plan formé par les axes XX' et YY'.
A cet effet, un dispositif 103, placé sur la partie mobile du piston 109, permet de mesurer l'écart angulaire θ dit de compliance (voir figure 6), que fait le bras 102, en pivotant autour de l'axe CC', avec la direction AA'.

On considère, dans le cas de cette application, que l'écart angulaire θ est faible et qu'il est alors tout à fait possible d'assimiler sa mesure à celle d'un déplacement d selon l'axe DD'. Les valeurs des déplacements Px et Py selon les directions XX' et YY' sont ainsi corrigées d'un écart f(θ) et g(θ), qui sont alors des fonctions de la valeur de l'angle de tangence α, de l'écart angulaire de compliance θ, et de la configuration géométrique du bras 102.
Px devient égal à P*Cosinus α + f(θ) et Py est égal à P*Sinus α + g(θ).
Dans le cas de la présente application f(θ) est égal à d*Sinus α et g(θ) est égal à d* Cosinus α.

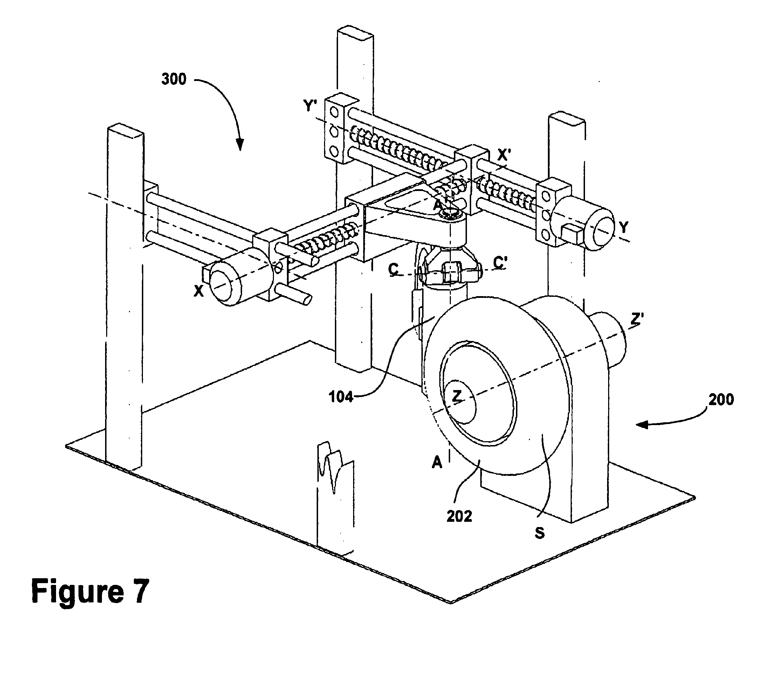

La figure 7 représente l'appareillage tel que décrit précédemment dans une autre position de la tête de pose 100 par rapport à la surface S.

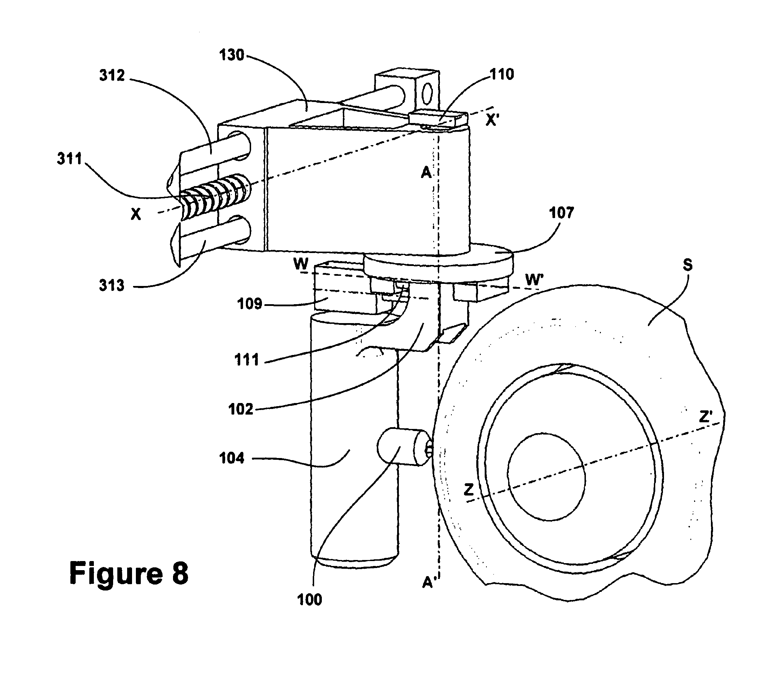

De même, le dispositif mécanique retenu pour lier la tête de pose 100 à la platine 130 peut être remplacé de manière équivalente par un mécanisme tel que représenté sur la figure 8. Dans cette variante de réalisation, la platine 130 supporte un axe motorisé 110 sur lequel est fixée une base 107. L'axe motorisé est sensiblement confondu avec l'axe AA'. La base 107 supporte une glissière 111 sur laquelle coulisse librement le bras 102 selon une direction WW' perpendiculaire à l'axe AA' et à la direction transversale bb' de la bandelette B au point de contact Q entre le moyen d'application 112 et la surface de réception. Ainsi lorsque le moyen d'application est en contact avec la surface S, l'axe WW' est perpendiculaire au plan formé par la bandelette au point de contact Q entre le moyen d'application 112 et la surface de réception S, ou encore à la direction TT', tangente au profil de la surface S au point d'application Q. Le bras 102 supporte l'outil d'extrusion 104 qui débouche sur le moyen d'application 112 de la bandelette B situé sur la tête d'application 100.
Un piston 109 est fixé par une de ses extrémités à la base 107 et applique une force constante dans une direction parallèle à la direction WW' sur le bras 102 de manière à maintenir le moyen d'application 112 en contact permanent avec la surface S.

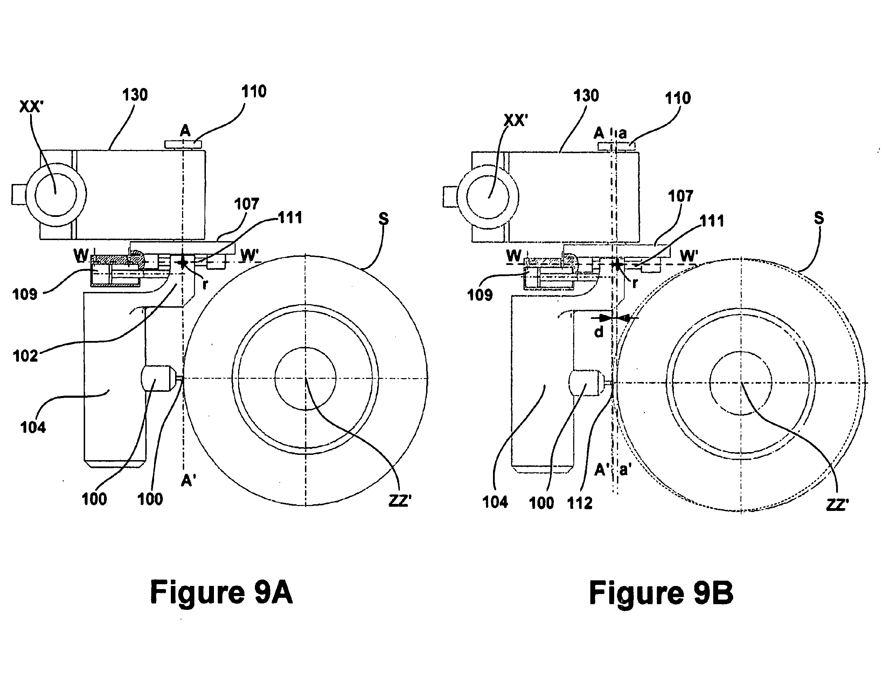

Un dispositif 103 (non visualisé) permet de mesurer la distance d, dite distance de compliance, entre l'axe AA' et un axe aa' parallèle à AA' et passant par un point de référence r situé sur l'axe WW' tel que représenté sur les figures 9A et 9B.
L'automatisme corrige les valeurs des déplacements Px et Py de manière à ce que l'axe aa" et l'axe AA' soient toujours confondus.
Px devient alors égal à P*Cosinus α + f(d) et Py est égal à P*Sinus α + g(d) et où f(d) est égal à d*Sinus α et g(d) est égal à d* Cosinus α.

La mise en oeuvre d'un appareillage conforme à celui ayant servi de support à la description ci-dessus est largement facilitée par sa grande faculté d'adaptation.

A titre d'exemple, on décrira brièvement ci-après le processus de pose d'une bandelette sur une surface de réception sensiblement toroïdale, en l'espèce, une carcasse de pneumatique.

Dans une première étape du processus de pose, l'opérateur est invité par l'automatisme à introduire les valeurs des paramètres constants tels que la valeur du pas P, la valeur de la vitesse circonférentielle V, ainsi que les valeurs des conditions de départ et de dégagement en fin de pose.

Dans une deuxième étape, et pour une dimension donnée, l'opérateur positionne manuellement la tête de pose en agissant directement par l'intermédiaire de boutons de commande situés sur la face avant de l'automatisme, sur les moteurs 310 et 320 commandant les mouvements en XX' et en YY', ainsi que sur le moteur 110 commandant la rotation autour de l'axe AA', de manière à venir faire approximativement tangenter le moyen d'application avec le point de la surface S qu'il aura préalablement sélectionné.

Il est alors possible de lancer l'automatisme qui provoquera l'activation du vérin 109 et une avancée de la tête de pose 100 de manière à venir rechercher le contact avec la surface de réception. La mise en contact est établie lorsque l'un des palpeurs 105 ou 106 est activé. L'automatisme peut alors agir sur le moteur 110 de manière à ce que les deux palpeurs soient simultanément en contact avec la surface de réception, tout en ajustant la compliance de manière à ce que l'angle ou la distance de compliance soit égal à zéro. L'automatisme mémorise ensuite les coordonnées selon les axes XX' et YY' du point de départ, que l'on notera Xd et Yd, ainsi que la valeur initiale de l'angle de tangence α notée αd. Enfin l'automatisme lance la mise en mouvement de la surface de réception en ajustant la vitesse de rotation de manière à la rendre égale à la vitesse V préalablement introduite, et la pose de la bandelette peut commencer.

L'automatisme détermine à chaque instant, sur la base de la valeur de l'angle de tangence α, les déplacements de la tête d'application dans une direction sensiblement parallèle à la tangente TT' de manière à ce que la distance entre deux spires consécutives soit en tout point de la circonférence égale à la valeur d'un pas P donné, et oriente la tête d'application autour de l'axe AA' de manière à ce que la direction transversale bb' de la bandelette B au point de contact Q entre le moyen d'application de la bandelette et la surface de réception (S) soit parallèle à la tangente TT'. On peut dire alors que la tête de pose "suit" la forme du profil transversal de la surface de réception.

Le cycle de pose se déroule sans qu'il soit nécessaire à l'opérateur d'intervenir d'une quelconque manière et, à moins que ce dernier ne l'interrompe, celui-ci s'achèvera lorsque la tête de pose sera parvenue à une position correspondant au symétrique de la position de départ par rapport à un plan perpendiculaire à l'axe ZZ' et passant par l'équateur de l'enveloppe ou lorsque la position suivant YY' redevient égale à la position de départ.

A l'achèvement du cycle de pose l'automatisme déplace la tête de pose dans une position de dégagement permettant à l'opérateur de poursuivre les opérations de construction de l'enveloppe de pneumatique.

Au cycle suivant, et dans le cas où la dimension à traiter est assez proche de la précédente, l'automatisme vient positionner la tête de pose directement aux valeurs préenregistrées Xd, Yd et αd avant d'initier le cycle de pose.

Il convient de noter que cet exemple d'utilisation ne saurait en rien constituer un caractère limitatif et il est aisé d'imaginer d'autres conditions de départ et d'arrêt du cycle de l'automatisme. Ainsi, lorsque la surface de réception présente une forme sensiblement cylindrique, les positionnements selon l'axe XX' de la tête de pose en début et en fin de cycle peuvent être soit pré enregistrés, ce qui représente un gain de temps appréciable par rapport aux situations où il était également nécessaire de mémoriser la forme du profil transversal de la surface de réception, soit déterminés manuellement par l'opérateur en fonction des besoins.

## Revendications

1. Appareillage destiné à la pose d'une bandelette (B), sur une surface de réception (S) de forme sensiblement toroïdale ou cylindrique en rotation autour d'un axe ZZ', comprenant :
- un bâti (200) supportant la surface de réception (S) et muni d'un moteur (201) destiné à mettre cette dernière en rotation,
- un module de distribution de ladite bandelette, coopérant avec une tête de pose (100) débouchant sur un moyen d'application (112) destiné à déposer la bandelette (B) sur ladite surface de réception (S), ladite tête de pose (100) étant susceptible d'avoir des mouvements de translations selon un axe XX' parallèle à l'axe de rotation ZZ' et selon un axe YY' parallèle à une direction radiale passant par le point (Q) correspondant sensiblement au point de contact entre le moyen d'application (112) de la bandelette et la surface de réception (S), ladite tête de pose (100) étant dotée d'un mouvement de rotation autour d'un axe AA' sensiblement perpendiculaire aux axes XX' et YY' et tangent à la surface de réception (S) au point de contact (Q) et,
- une liaison avec un automatisme de pilotage de chacun des organes (110, 201, 310, 320) autorisant ces mouvements,
**caractérisé en ce que** :
- la tête de pose (100) comporte un dispositif (105, 106) permettant de déterminer la position angulaire de la dite tête de pose autour de l'axe AA' et d'estimer l'angle de tangence (α) formé entre là tangente TT' au profil transversal de la surface de réception (S) au point de contact (Q), et un axe parallèle à l'axe de rotation ZZ',
- les mouvements de la tête de pose en rotation autour de l'axe AA' et en translation le long des axes XX' et YY' sont déterminés en fonction de la valeur de l'angle de tangence (α) de façon à déplacer la tête de posé (100) continuellement au cours de chaque révolution de la surface de réception, dans une direction sensiblement parallèle à la tangente TT'.

2. Appareillage selon la revendication 1 dans lequel le dispositif permettant d'estimer la valeur de l'angle de tangence (α) est situé sur la tête de pose (100), et est constitué par au moins deux palpeurs (105, 106) disposés transversalement de part et d'autre du moyen d'application (112) de la bandelette (B) sur la surface de réception (S).

3. Appareillage selon la revendication 2 dans lequel la direction transversale bb' de la bandelette (B) au point de contact (Q) entre le moyen d'application (112) et la surface de réception (S) est parallèle à la tangente TT' lorsque les deux palpeurs (105, 106) sont simultanément en contact avec la surface de réception (S).

4. Appareillage selon les revendications 2 et 3 dans lequel l'écartement transversal entre les deux palpeurs (105, 106) est sensiblement égal à la largeur (1) de la bandelette (B).

5. Appareillage selon la revendication 1 dans lequel la tête de pose (100) est reliée à une platine (130) se déplaçant en translation dans les directions XX' et YY', par l'intermédiaire d'un axe motorisé (110), monté sur la platine (130), ledit axe motorisé 110 pivotant autour d'un axe se confondant avec l'axe AA' et supportant une base (107), ladite base (107) portant un arbre (108) pivotant librement autour d'un axe CC' perpendiculaire à l'axe AA' et parallèle à la direction transversale bb' de la bandelette (B) au point de contact (Q) entre le moyen d'application (112) et la surface de réception (S), ledit arbre (108) supportant un bras (102) sur lequel est fixé ladite tête de pose (100).

6. Appareillage selon la revendication 5 comportant des moyens (109) pour exercer une force sur le bras (102) de manière à maintenir le moyen d'application (112) situé sur la tête de pose (100) en contact avec la surface de réception (S).

7. Appareillage selon la revendication 6 dans lequel la platine (130) supporte un dispositif (103) permettant d'estimer l'écart angulaire dit de compliance (θ) formé par le pivotement du bras (102) autour de l'axe CC', entre l'axe AA' et une droite aa' perpendiculaire à un plan formé par les axes XX' et YY'..

8. Appareillage selon la revendication 1 dans lequel la tête de pose (100) est reliée à une platine (130) se déplaçant en translation dans les directions XX' et YY', par l'intermédiaire d'un axe motorisé (110) monté sur la platine (130), ledit axe motorisé (110) pivotant autour d'un axe se confondant avec l'axe AA' et supportant une base (107), ladite base (107) portant une glissière (111) orientée selon un axe WW' perpendiculaire au plan formé par la bandelette (B) au point de contact (Q) entre le moyen d'application (112) et la surface de réception (S), sur laquelle coulisse librement un bras (102) sur lequel est fixé ladite tête de pose (100).

9. Appareillage selon la revendication 8 comportant des moyens (109) pour exercer une force sur le bras (102) de façon à maintenir la tête d'application en contact avec la surface de réception (S).

10. Appareillage selon la revendication 9 dans lequel la platine (130) supporte un dispositif (103) permettant d'estimer la distance dite de compliance (d) entre l'axe AA' et une droite aa', parallèle à AA', passant par un point de référence (r) situé sur l'axe WW' .

11. Appareillage selon la revendication 1 dans lequel la tête de pose (100) supporte un outil d'extrusion (104) destiné à réaliser la bandelette (B).

12. Procédé de pose d'une bandelette (B), comprenant une étape consistant à déposer la bandelette (B) sur une surface de réception (S) de forme sensiblement toroïdale ou cylindrique en rotation autour d'un axe ZZ', à l'aide d'une tête de pose (100) débouchant sur un moyen d'application (112), ladite tête de pose (100) étant susceptible d'avoir des mouvements de translations selon un axe XX' parallèle à l'axe de rotation ZZ' et selon un axe YY' parallèle à une direction radiale passant par le point (Q) correspondant sensiblement au point de contact entre le moyen d'application (112) de la bandelette (B) et la surface de réception (S), ladite tête de pose (100) étant dotée d'un mouvement de rotation autour d'un axe AA' sensiblement perpendiculaire aux axes XX' et YY' et tangent à la surface (S) au point de contact (Q),
**caractérisé en ce que** au cours de ladite étape
- la tête de pose détermine sa position angulaire autour de l'axe AA', et apprécie l'angle de tangence (α) formé entre la tangente TT' au profil transversal de la surface de réception (S) au point de contact (Q), et un axe parallèle à l'axe de rotation ZZ',
- les mouvements de la tête de pose (100) en rotation autour de l'axe AA' et en translation le long des axes XX' et YY' sont commandés par un automatisme en fonction de l'angle de tangence (α) de façon à déplacer la tête de pose (100) continûment au cours de chaque révolution de la surface de réception, dans une direction sensiblement parallèle à la tangente TT'.

13. Procédé selon la revendication 12 dans lequel on pilote les mouvements de la tête de pose (100) dans les directions XX' et YY' en fonction de l'angle de tangence (α), de manière à ce que la distance entre deux spires consécutives soit en tout point de la circonférence égale à la valeur d'un pas (P) donné.

14. Procédé selon la revendication 13 dans lequel on contrôle l'orientation de la tête de pose (100) autour de l'axe AA' de manière à ce que la direction transversale bb' de la bandelette (B) au point de contact (Q) du moyen d'application de la bandelette (112) avec la surface de réception (S), soit parallèle à la tangente TT'.

15. Procédé selon la revendication 13 dans lequel la valeur du pas (P) est sensiblement égale à la largeur (l) de la bandelette (B).

16. Procédé selon la revendication 14 dans lequel on régule la vitesse de rotation de la surface de réception de manière à rendre constante la vitesse circonférentielle d'application de la bandelette (B) au point de contact (Q) entre le moyen d'application (112) de la bandelette (B) et la surface de réception (S).

17. Procédé selon la revendication. 12 dans lequel une platine (130) se déplaçant en translation selon les axes XX' et YY', supporte la tête de pose (100) par l'intermédiaire d'un axe motorisé (110) monté sur la platine (130), ledit axe motorisé (110) pivotant autour d'un axe se confondant avec l'axe AA' et supportant une base (107), ladite base (107) portant un arbre (108) pivotant librement autour d'un axe CC' perpendiculaire à l'axe AA' et parallèle à la direction transversale bb' de la bandelette (B) au point de contact (Q) entre le moyen d'application (112) et la surface de réception S, comporte un dispositif permettant d'estimer la valeur de l'écart angulaire de compliance (θ), formé par le pivotement du bras (102) autour de l'axe CC', entre l'axe AA' et une droite aa' perpendiculaire à un plan formé par les axes XX' et YY' et dans lequel on corrige la position de la platine (130) selon les axes XX' et YY' de manière à ramener ledit écart angulaire de compliance à une valeur sensiblement égale à zéro.

18. Procédé selon la revendication 12 dans lequel une platine (130) se déplaçant selon les axes XX' et YY' et supportant la tête de pose (110) par l'intermédiaire d'un axe motorisé (110) monté sur la platine (130), ledit axe motorisé (110) pivotant autour d'un axe se confondant avec l'axe AA' et supportant une base (107), ladite base (107) portant une glissière (111) orientée selon un axe WW' perpendiculaire au plan formé par la bandelette (B) au point de contact (Q) entre le moyen d'application (112) et la surface de réception (S), sur laquelle coulisse librement un bras (102) sur lequel est fixé ladite tête de pose (100), comporte un dispositif permettant d'estimer la valeur de la distance de compliance (d) entre l'axe AA' et une droite aa' parallèle à AA' et passant par un point de référence (r) situé sur l'axe WW', et dans lequel on corrige la position de la platine (130) selon les axes XX' et YY' de manière à ramener ladite distance de compliance (d) à une valeur sensiblement égale à zéro.

## Claims

1. An apparatus designed for laying a strip (B) on a receiving surface (S) substantially toroidal or cylindrical in shape rotating about an axis ZZ', comprising :
- a frame (200) supporting the receiving surface (S) and provided with a motor (201) designed to set the latter in rotation,
- a supply module for said strip, cooperating with a laying head (100) emerging into an application means (112) designed to deposit the strip (B) on said receiving surface (S), said laying head (100) being capable of performing translational movements along an axis XX' parallel to the axis of rotation ZZ' and along an axis YY' parallel to a radial direction passing through the point (Q) corresponding substantially to the point of contact between the application means (112) for the strip and the receiving surface (S), said laying head (100) being capable of rotary motion about an axis AA' which is substantially perpendicular to the axes XX' and YY' and tangential to the receiving surface (S) at the point of contact (Q) and,
- connection with an automatic device controlling each of the components (110, 201, 310, 320) enabling these movements,
**characterised in that** :
- the laying head (100) comprises a device (105, 106) allowing determination of the angular position of said laying head about the axis AA' and estimation of the tangency angle (α) formed between the tangent TT' to the transverse profile of the receiving surface (S) at the point of contact (Q), and an axis parallel to the axis of rotation ZZ',
- the movements of the laying head in rotation about the axis AA' and in translation along the axes XX' and YY' are determined as a function of the value of the tangency angle (α) so as to displace the laying head continually during each revolution of the receiving surface, in a direction substantially parallel to the tangent TT'.

2. An apparatus according to claim 1, in which the device allowing the value of the tangency angle (α) to be estimated is situated on the laying head (100) and consists of at least two sensors (105, 106) disposed transversely on either side of the means (112) for applying the strip (B) onto the receiving surface (S).

3. An apparatus according to claim 2, in which the transverse direction bb' of the strip (B) at the point of contact (Q) between the application means (112) and the receiving surface (S) is parallel to the tangent TT' when the two sensors (105, 106) are simultaneously in contact with the receiving surface (S).

4. An apparatus according to claims 2 and 3, in which the transverse spacing between the two sensors (105, 106) is substantially equal to the width (1) of the strip (B).

5. An apparatus according to claim 1, in which the laying head (100) is connected to a plate (130) moving translationally in the directions XX' and YY', through the intermediary of a motor-driven shaft (110) mounted on the plate (130), said motor-driven shaft (110) pivoting about an axis coincident with the axis AA' and supporting a foot (107), said foot (107) bearing a shaft (108) pivoting freely about an axis CC' perpendicular to the axis AA' and parallel to the transverse direction bb' of the strip (B) at the point of contact (Q) between the application means (112) and the receiving surface (S), said shaft (108) supporting an arm (102) on which is fixed said laying head (100).

6. An apparatus according to claim 5, comprising means (109) for exerting a force on the arm (102) in such a way as to keep the application means (112) situated on the laying head (100) in contact with the receiving surface (S).

7. An apparatus according to claim 6, in which the plate (130) supports a device (103) allowing estimation of the "compliance" angular divergence (θ), formed by pivoting of the arm (102) about the axis CC', between the axis AA' and a straight line aa' perpendicular to a plane formed by the axes XX' and YY'.

8. An apparatus according to claim 1, in which the laying head (100) is connected to a plate (130) moving translationally in the directions XX' and YY', through the intermediary of a motor-driven shaft (110) mounted on the plate (130), said motor-driven shaft (110) pivoting about an axis coincident with the axis AA' and supporting a foot (107), said foot (107) bearing a slide (111) oriented along an axis WW' perpendicular to the plane formed by the strip (B) at the point of contact (Q) between the application means (112) and the receiving surface (S), on which slide (111) there slides freely an arm (102) on which is fixed said laying head (100).

9. An apparatus according to claim 8, comprising means (109) for exerting a force on the arm (102) in such a way as to keep the application head in contact with the receiving surface (S).

10. An apparatus according to claim 9, in which the plate (130) supports a device (103) allowing estimation of the "compliance" distance (d) between the axis AA' and a straight line aa', parallel to AA', passing through a point of reference (r) situated on the axis WW'.

11. An apparatus according to claim 1, in which the laying head (100) supports an extrusion die (104) designed to produce the strip (B).

12. A process for laying a strip (B), comprising a stage consisting in depositing the strip (B) on a receiving surface (S) substantially toroidal or cylindrical in shape rotating about an axis ZZ', by means of a laying head (100) emerging into an application means (112), said laying head (100) being capable of performing translational movements along an axis XX' parallel to the axis of rotation ZZ' and along an axis YY' parallel to a radial direction passing through the point (Q) corresponding substantially to the point of contact between the application means (112) for the strip and the receiving surface (S), said laying head (100) being capable of rotary motion about an axis AA' which is substantially perpendicular to the axes XX' and YY' and tangential to the surface (S) at the point of contact (Q),
**characterised in that** during said stage
- the laying head determines its angular position about the axis AA', and assesses the tangency angle (α) formed between the tangent TT' to the transverse profile of the receiving surface (S) at the point of contact (Q) and an axis parallel to the axis of rotation ZZ',
- the movements of the laying head (100) in rotation about the axis AA' and in translation along the axes XX' and YY' are controlled by an automatic device as a function of the tangency angle (α) so as to displace the laying head (100) continuously during each revolution of the receiving surface, in a direction substantially parallel to the tangent TT'.

13. A process according to claim 12, in which the movements of the laying head (100) are controlled in the directions XX' and YY' as a function of the tangency angle (α), in such a way that the distance between two consecutive turns is equal at all points of the circumference to the value of a given pitch (P).

14. A process according to claim 13, in which the orientation of the laying head (100) about the axis AA' is controlled such that the transverse direction bb' of the strip (B) at the point of contact (Q) between the strip application means (112) and the receiving surface (S) is parallel to the tangent TT'.

15. A process according to claim 13, in which the value of the pitch (P) is substantially equal to the width (1) of the strip (B).

16. A process according to claim 14, in which the rotational speed of the receiving surface is adjusted in such a way as to render constant the circumferential speed of application of the strip (B) at the point of contact (Q) between the application means (112) for the strip (B) and the receiving surface (S).

17. A process according to claim 12, in which a plate (130) moving translationally along the axes XX' and YY' supports the laying head (100) through the intermediary of a motor-driven shaft (110) mounted on the plate (130), said motor-driven shaft (110) pivoting about an axis coincident with the axis AA' and supporting a foot (107), said foot (107) bearing a shaft (108) pivoting freely about an axis CC' perpendicular to the axis AA' and parallel to the transverse direction bb' of the strip (B) at the point of contact (Q) between the application means (112) and the receiving surface S, comprises a device allowing estimation of the value of the compliance angular divergence (θ), formed by pivoting of the arm (102) about the axis CC', between the axis AA' and a straight line aa' perpendicular to a plane formed by the axes XX' and YY' and in which the position of the plate (130) along the axes XX' and YY' is corrected so as to bring said compliance angular divergence back to a value substantially equal to zero.

18. A process according to claim 12, in which a plate (130) moving along the axes XX' and YY' and supporting the laying head (110) through the intermediary of a motor-driven shaft (110) mounted on the plate (130), said motor-driven shaft (110) pivoting about an axis coincident with the axis AA' and supporting a foot (107), said foot (107) bearing a slide (111) oriented along an axis WW' perpendicular to the plane formed by the strip (B) at the point of contact (Q) between the application means (112) and the receiving surface (S), on which there slides freely an arm (102) on which is fixed said laying head (100), comprises a device allowing estimation of the value of the compliance distance (d) between the axis AA' and a straight line aa' parallel to AA' and passing through a reference point (r) situated on the axis WW', and in which the position of the plate (130) on the axes XX' and YY' is corrected so as to bring said compliance distance (d) back to a value substantially equal to zero.

## Patentansprüche

1. Vorrichtung zum Verlegen eines Streifens (B) auf einer im Wesentlichen wulstförmigen oder zylindrischen, um eine Achse ZZ' drehenden Aufnahmefläche (S), die Folgendes aufweist:
- ein Gestell (200), das die Aufnahmefläche (S) trägt und mit einem Motor (201) versehen ist, der diese in Drehung versetzt,
- ein Modul zum Verteilen des Streifens, das mit einem Verlegekopf (100) zusammenwirkt, der in ein Auftragmittel (112) mündet, das den Streifen (B) auf der Aufnahmefläche (S) verlegt, wobei der Verlegekopf (100)
Translationsbewegungen entlang einer zur Drehachse ZZ' parallelen Achse XX' und entlang einer Achse YY' ausführen kann, die zu einer radialen Richtung parallel ist, welche durch den Punkt (Q) verläuft, der im Wesentlichen dem Kontaktpunkt zwischen dem Mittel (112) zum Auftragen des Streifens und der Aufnahmefläche (S) entspricht, wobei der Verlegekopf (100) eine Drehbewegung um eine Achse AA' ausführen kann, die im Wesentlichen senkrecht zu den Achsen XX' und YY' und eine Tangente zur Aufnahmefläche (S) im Kontaktpunkt (Q) ist, und
- eine Verbindung mit einer Automatik zum Steuern der Organe (110, 201, 310, 320), die diese Bewegungen erlauben,
**dadurch gekennzeichnet, dass**
- der Verlegekopf (100) eine Vorrichtung (105, 106) aufweist, die es ermöglicht, die Winkelposition des Verlegekopfes um die Achse AA' zu bestimmen und den Tangentenwinkel (α) zwischen der Tangente TT' zum Querprofil der Aufnahmefläche (S) im Kontaktpunkt (Q) und einer zur Drehachse ZZ' parallelen Achse zu schätzen,
- die Bewegungen des Verlegekopfes in Drehung um die Achse AA' und in Translation entlang den Achsen XX' und YY' abhängig vom Wert des Tangentenwinkels (α) bestimmt werden, sodass der Verlegekopf (100) bei jeder Umdrehung der Aufnahmefläche kontinuierlich in einer Richtung bewegt wird, die im Wesentlichen parallel zur Tangente TT' ist.

2. Vorrichtung nach Anspruch 1, bei der die Vorrichtung zum Schätzen des Wertes des Tangentenwinkels (α) auf dem Verlegekopf (100) angeordnet ist und aus mindestens zwei Fühlern (105, 106) besteht, die quer auf beiden Seiten des Mittels (112) zum Auftragen des Streifens (B) auf der Aufnahmefläche (S) angeordnet sind.

3. Vorrichtung nach Anspruch 2, bei der die Querrichtung bb' des Streifens (B) im Kontaktpunkt (Q) zwischen dem Auftragmittel (112) und der Aufnahmefläche (S) parallel zur Tangente TT' ist, wenn die beiden Fühler (105, 106) gleichzeitig in Kontakt mit der Aufnahmefläche (S) stehen.

4. Vorrichtung nach den Ansprüchen 2 und 3, bei der der Querabstand zwischen den beiden Fühlern (105, 106) im Wesentlichen der Breite (1) des Streifens (B) entspricht.

5. Vorrichtung nach Anspruch 1, bei der der Verlegekopf (100) mit einer sich in Translation in den Richtungen XX' und YY' bewegenden Tragplatte (130) über eine auf der Tragplatte (130) montierte motorisierte Achse (110) verbunden ist, die um eine mit der Achse AA' zusammenfallende Achse verschwenkt, welche eine Basis (107) mit einer Welle (108) trägt, die frei um eine Achse CC' verschwenkt, welche senkrecht zur Achse AA' und parallel zur Querrichtung bb' des Streifens (B) im Kontaktpunkt (Q) zwischen dem Auftragmittel (112) und der Aufnahmefläche (S) ist, wobei die Welle (108) einen Arm (102) trägt, an dem der Verlegekopf (100) befestigt ist.

6. Vorrichtung nach Anspruch 5 mit Mitteln (109), die eine Kraft auf den Arm (102) ausüben, sodass das auf dem Verlegekopf (100) angeordnete Auftragmittel (112) in Kontakt mit der Aufnahmefläche (S) gehalten wird.

7. Vorrichtung nach Anspruch 6, bei der die Tragplatte (130) eine Vorrichtung (103) trägt, die es ermöglicht, den als Compliance bezeichneten Winkelabstand (θ) zu schätzen, der durch das Verschwenken des Arms (102) um die Achse CC' zwischen der Achse AA' und einer Gerade aa' gebildet wird, die senkrecht zu einer von den Achsen XX' und YY' gebildeten Ebene ist.

8. Vorrichtung nach Anspruch 1, bei der der Verlegekopf (100) mit einer sich in Translation in den Richtungen XX'und YY' drehenden Tragplatte (130) über eine auf der Tragplatte (130) montierte motorisierte Achse (110) verbunden ist, die um eine mit der Achse AA' zusammenfallende Achse verschwenkt und eine Basis (107) mit einer Schiene (111) trägt, welche in einer Achse WW' ausgerichtet ist, die senkrecht zu der Ebene ist, welche vom Streifen (B) im Kontaktpunkt (Q) zwischen dem Auftragmittel (112) und der Aufnahmefläche (S) gebildet wird, und auf der ein Arm (102) frei gleitet, an dem der Verlegekopf (100) befestigt ist.

9. Vorrichtung nach Anspruch 8 mit Mitteln (109), die eine Kraft auf den Arm (102) ausüben, um den Auftragkopf in Kontakt mit der Aufnahmefläche (S) zu halten.

10. Vorrichtung nach Anspruch 9, bei der die Tragplatte (130) eine Vorrichtung (103) trägt, die es ermöglicht, den sogenannten Compliance-Abstand (d) zwischen der Achse AA' und einer zu AA' parallelen Gerade aa' zu schätzen, die durch einen Referenzpunkt (r) auf der Achse WW' verläuft.

11. Vorrichtung nach Anspruch 1, bei der der Verlegekopf (100) ein Extrusionswerkzeug (104) zum Herstellen des Streifens (B) trägt.

12. Verfahren zum Verlegen eines Streifens (B) mit einem Schritt, der darin besteht, den Streifen (B) auf einer im Wesentlichen wulstförmigen oder zylindrischen, sich um eine Achse ZZ' drehenden Aufnahmefläche (S) zu verlegen, und zwar mithilfe eines Verlegekopfes (100), der in ein Auftragmittel (112) mündet, wobei der Verlegekopf (100) Translationsbewegungen entlang einer zur Drehachse ZZ' parallelen Achse XX' und einer Achse YY' ausführen kann, die parallel zu einer radialen Richtung ist, die durch den Punkt (Q) verläuft, der im Wesentlichen dem Kontaktpunkt zwischen dem Mittel (112) zum Auftragen des Streifens (B) und der Aufnahmefläche (S) entspricht, wobei der Verlegekopf (100) eine Drehbewegung um eine Achse AA' ausführen kann, die im Wesentlichen senkrecht zu den Achsen XX' und YY' und eine Tangente zur Fläche (S) im Kontaktpunkt (Q) ist,
**dadurch gekennzeichnet, dass** bei diesem Schritt
- der Verlegekopf seine Winkelposition um die Achse AA' bestimmt und den Tangentenwinkel (α) zwischen der Tangente TT' zum Querprofil der Aufnahmefläche (S) im Kontaktpunkt (Q) und einer zur Drehachse ZZ' parallelen Achse schätzt,
- die Bewegungen des Verlegekopfes (100) in Drehung um die Achse AA' und in Translation entlang den Achsen XX' und YY' von einer Automatik abhängig vom Tangentenwinkel (α) gesteuert werden, sodass der Verlegekopf (100) kontinuierlich bei jeder Umdrehung der Aufnahmefläche in einer Richtung bewegt wird, die im Wesentlichen parallel zur Tangente TT' ist.

13. Verfahren nach Anspruch 12, bei dem die Bewegungen des Verlegekopfes (100) in den Richtungen XX' und YY' abhängig vom Tangentenwinkel (α) gesteuert werden, sodass der Abstand zwischen zwei aufeinanderfolgenden Windungen in jedem Punkt des Umfangs dem Wert eines gegebenen Schrittes (P) entspricht.

14. Verfahren nach Anspruch 13, bei dem die Ausrichtung des Verlegekopfes (100) um die Achse AA' kontrolliert wird, sodass die Querrichtung bb' des Streifens (B) im Kontaktpunkt (Q) des Mittels (112) zum Auftragen des Streifens mit der Aufnahmefläche (S) parallel zur Tangente TT' ist.

15. Verfahren nach Anspruch 13, bei dem der Wert des Schrittes (P) im Wesentlichen der Breite (1) des Streifens (B) entspricht.

16. Verfahren nach Anspruch 14, bei dem die Drehgeschwindigkeit der Aufnahmefläche so geregelt wird, dass die Umfangsgeschwindigkeit des Auftragens des Streifens (B) im Kontaktpunkt (Q) zwischen dem Mittel (112) zum Auftragen des Streifens (B) und der Aufnahmefläche (S) konstant ist.

17. Verfahren nach Anspruch 12, bei dem eine sich in Translation entlang den Achsen XX'und YY' bewegende Tragplatte (130) den Verlegekopf (100) über eine auf der Tragplatte (130) montierte motorisierten Achse (110) trägt, die um eine mit der Achse AA' zusammenfallende Achse verschwenkt und eine Basis (107) mit einer Welle (108) trägt, die frei um eine Achse CC' verschwenkt, welche senkrecht zur Achse AA' und parallel zur Querrichtung bb' des Streifens (B) im Kontaktpunkt (Q) zwischen dem Auftragmittel (112) und der Aufnahmefläche (S) ist, und eine Vorrichtung aufweist, die es ermöglicht, den Wert des Compliance-Winkelabstands (θ) zu schätzen, der durch das Verschwenken des Arms (102) um die Achse CC' zwischen der Achse AA' und einer Gerade aa' gebildet wird, welche senkrecht zu einer von den Achsen XX' und YY' gebildeten Ebene ist, und bei dem die Position der Tragplatte (130) entlang den Achsen XX' und YY' korrigiert wird, sodass der Compliance-Winkelabstand auf einen Wert von im Wesentlichen null zurückgeführt wird.

18. Verfahren nach Anspruch 12, bei dem eine sich in Translation entlang den Achsen XX' und YY' bewegende Tragplatte (130) den Verlegekopf (110) über eine auf der Tragplatte (130) montierte motorisierte Achse (110) trägt, die um eine mit der Achse AA' zusammenfallende Achse verschwenkt und eine Basis (107) mit einer Schiene (111) trägt, welche nach einer Achse WW' ausgerichtet ist, die senkrecht zu der Ebene ist, die vom Streifen (B) im Kontaktpunkt (Q) zwischen dem Auftragmittel (112) und der Aufnahmefläche (S) gebildet wird, und auf der ein Arm (102) frei gleitet, an dem der Verlegekopf (100) befestigt ist, eine Vorrichtung aufweist, die es ermöglicht, den Wert des Compliance-Abstands (d) zwischen der Achse AA' und einer Gerade aa' zu schätzen, die parallel zu AA' ist und durch einen auf der Achse WW' gelegenen Referenzpunkt (r) verläuft, und bei dem die Position der Tragplatte (130) entlang den Achsen XX' und YY' korrigiert wird, sodass der Compliance-Abstand (d) auf einen Wert von im Wesentlichen null zurückgeführt wird.
